Europäisches Patentamt

European Patent Office

Office européen des brevets

(11) Veröffentlichungsnummer: **0 289 831 B1**

## (12) EUROPÄISCHE PATENTSCHRIFT

(45) Veröffentlichungstag der Patentschrift: **02.09.92**

(21) Anmeldenummer: **88106029.7**

(22) Anmeldetag: **15.04.88**

(51) Int. Cl.⁵: **F16L 47/02**, F16L 13/10

(54) **Verbindungsformstück aus Kunststoff.**

(30) Priorität: **07.05.87 DE 3715184**

(43) Veröffentlichungstag der Anmeldung:
**09.11.88 Patentblatt 88/45**

(45) Bekanntmachung des Hinweises auf die
Patenterteilung:
**02.09.92 Patentblatt 92/36**

(84) Benannte Vertragsstaaten:
**AT BE CH DE FR IT LI NL SE**

(56) Entgegenhaltungen:
**DE-A- 2 419 893**
**DE-A- 2 707 492**
**GB-A- 913 957**
**US-A- 2 785 910**
**US-A- 3 784 235**

**KUNSTSTOFF-BERATER, Band 17, Nr. 4, 1972,
Seiten 285-292, Isernhagen; G. MENGES et
al.: "Geklebte Kunststoffrohrverbindungen
unter dem Einfluss von Innendruck, Temperatur und Chemikalien"**

(73) Patentinhaber: **Friedrichsfeld Aktiengesellschaft Keramik- und Kunststoffwerke
Steinzeugstrasse 50
W-6800 Mannheim 71(DE)**

(72) Erfinder: **Stahnke, Bernd-R., Dipl.-Ing.
Panoramastrasse 38/1
W-6940 Weinheim(DE)**
Erfinder: **Hesse, Horst, Dipl.-Ing.
Steinzeugstrasse 68
W-6800 Mannheim 71(DE)**
Erfinder: **Lippe, Manfred, Dipl.-Ing.
Scheffelstrasse 7
W-6901 Dossenheim(DE)**
Erfinder: **Lorenz, Hans-Joachim, Dipl.-Ing.
Am Wetzelberg 49
W-6946 Gorxheimertal(DE)**
Erfinder: **Roth, Rudolf, Dipl.-Ing.
Waldweg 6
W-6901 Heiligkreuzsteinach(DE)**

(74) Vertreter: **Klose, Hans, Dipl.-Phys. et al
Kurfürstenstrasse 32
W-6700 Ludwigshafen(DE)**

EP 0 289 831 B1

## Beschreibung

Die Erfindung bezieht sich auf eine Verbindungsanordnung mit einem eine Muffe aufweisenden und aus Kunststoff bestehenden Verbindungsformstück gemäß den im Oberbegriff des Patentanspruchs 1 angegebenen Merkmalen.

Aus der DE-A-2 707 492 ist eine derartige Verbindungsanordnung bekannt, welche eine Muffe mit einem Anschlag für das einzuschiebende Rohrende aufweist. Die Innenfläche dieser Muffe ist mit ringförmigen und mittels Nuten miteinander verbundenen Rillen versehen, welche einen größeren Durchmesser als die Innenfläche selbst aufweisen. Die Rillen dienen zur Verteilung des Klebemittels, welches durch in der Muffenwand angeordnete Einlaßöffnungen unter Druck zugeführt wird. Die Umfangsflächen dieser Rillen weisen zur Außenfläche des eingeschobenen Rohrendes einen vergleichsweise großen Abstand auf und die Kraftübertragung erfolgt im wesentlichen über die radial engen Klebespalte zwischen der Innenfläche der Muffe und der Außenfläche des Rohrendes. Aufgrund der Rillen und der Nuten wird nur ein kleiner Teil der bei einer vorgegebenen Muffenlänge zur Verfügung stehenden Umfangsfläche als Innenfläche und damit als eigentliche Klebefläche genutzt. Die Länge der Muffe muß daher entsprechend groß vorgegeben werden. Ferner ist die Handhabung und Herstellung einer Verbindung nicht unproblematisch, da das Klebemittel unter Druck durch die genannten Einlaßöffnungen nach innen in den Klebespalt eingespritzt werden muß. Die zum Einspritzen des Klebemittels in den Klebespalt notwendigen Spritzpistolen oder sonstige Zuführgeräte müssen regelmäßig gewartet und gereinigt werden, um ein Verkleben von Düsen, Kanälen oder dergleichen zu vermeiden. Desweiteren ergeben sich Schwierigkeiten bei einem Achsversatz zwischen Rohrende und Muffe aufgrund der sich über den Umfang ändernden Spaltweite. Desweiteren ergeben sich Schwierigkeiten bei einem Winkelversatz zwischen Rohr und Muffe, da hierbei die Spaltweite auch in axialer Richtung nicht konstant ist, wobei über einen relativ großen Teil der axialen Länge der Spalt entweder zu klein oder zu groß werden kann. Ferner kann eine Ovalität von Rohr und/oder Muffe zu Schwierigkeiten im Hinblick auf die Geometrie des Klebespaltes führen. Da bekanntlich für eine optimale Klebung die Spaltweite weder zu groß noch zu klein sein darf, mußten in der Vergangenheit sehr enge und somit in der Fertigung kostenintensive Toleranzen eingehalten werden.

Aus der DE-A-12 18 140 ist ein Verbindungsformstück aus Kunststoff bekannt, welches aus spritzgegossenem PE (Polyäthylen) besteht und zur Verbindung von aus PVC (Polyvinylchlorid) bestehenden Rohren vorgesehen ist. Das Verbindungsformstück ist als eine Doppelmuffe ausgebildet und weist innen einen eingesetzten Ring aus PVC-Hart auf. Zur axialen Fixierung des eingelegten Ringes weist das Formstück am vorderen Ende einen Haltebund auf, der jedoch nicht über die Innenfläche des Klebe-Ringes hinausragt. Die zweiteilige Ausbildung erfordert einen nicht unerheblichen Fertigungsaufwand, wobei ferner zusätzliche Maßnahmen erforderlich sind, um die Dichtheitsanforderungen zu erfüllen. Die vorgeschlagene Schrumpfverbindung zwischen dem äußeren Teil aus PE und dem inneren Klebe-Ring aus PVC ergibt nicht die notwendige Sicherheit für eine dichte Verbindung.

Ferner ist aus der US-A-27 76 151 ein Fitting bekannt, um ein Metallrohr mit einem Kunststoffrohr zu verbinden. Dieses Fitting enthält außen eine Metallhülse, in welcher radial innen ein Adapter aus Kunststoff angeordnet ist. Zur axialen Fixierung ist das vordere freie Ende der Metallhülse durch Umbörderln nach innen gebogen. Der Innendurchmesser des letztgenannten nach innen gebogenen Teiles ist größer als der Innendurchmesser des Kunststoffadapters, in welchen das Kunststoffrohr eingeklebt wird. Um die Dichtheitsanforderungen zu erfüllen, ist zwischen der Metallhülse und dem Kunststoffadapter ein Dichtungsring aus einem elastischen Material zusätzlich angeordnet. Der Fertigungsaufwand eines derartigen Fittings ist nicht unerheblich und es treten auch hier die eingangs dargelegten Schwierigkeiten auf.

Der Erfindung liegt die Aufgabe zugrunde, die Verbindungsanordnung der eingangs genannten Art dahingehend weiterzubilden, daß eine schnelle und saubere Kaltschweißverbindung herstellbar ist. Es soll eine problemlose Verarbeitung ermöglicht werden und eine hohe Festigkeit der Kaltschweißverbindung soll bei langer Lebensdauer gewährleistet werden. Im Hinblick auf eine schnelle und wirtschaftliche Installation des Rohrleitungssystemes soll die Verbindungsanordnung nach möglichst kurzer Zeit belastbar sein und das Rohrleitungssystem unter Druck gesetzt werden können. Die Herstellung der Verbindung soll mit geringem Aufwand erfolgen, wobei Montagefehler weitgehend ausgeschlossen werden sollen. Ferner soll mit geringem Fertigungsaufwand gewährleistet werden, daß der Klebespalt in Umfangsrichtung und/oder in axialer Richtung zumindest näherungsweise konstant bleibt. Dies soll nicht durch enge Fertigungstoleranzen, sondern durch geeignete Ausbildung des Verbindungsformstückes erreicht werden.

Zur Lösung dieser Aufgabe wird eine Verbindungsanordnung gemäß Anspruch 1 vorgeschlagen.

Die vorgeschlagene Verbindungsanordnung zeichnet sich durch einen einfachen Aufbau aus und ermöglicht in einfacher Weise das Herstellen einer funktionssicheren und dichten Verbindung. Aufgrund der axial beabstandet angeordneten Profilteile wird ein definierter Spalt zwischen der Außenfläche des Rohrendes und der Innenfläche der Muffe zuverlässig vorgegeben, wobei in axialer Richtung und in Umfangsrichtung die Spaltbreite weitgehend konstant ist. Mittels den erfindungsgemäßen Profilteilen wird sichergestellt, daß der enge Spalt zwischen dem Rohrende und der Muffe gleichmäßig mit Klebemittel ausgefüllt wird und eine gleichmäßige Verschweißung bei schneller Belastbarkeit erfolgt. Zuverlässig wird eine koaxiale Ausrichtung gewährleistet und ein Winkelversatz oder Achsversatz und die daraus resultierenden Ungleichmäßigkeiten des Klebemittels im Spalt werden sicher vermieden. Mit geringem konstuktiven Aufwand wird ein definierter Klebespalt vorgegeben, der bei schneller und wirtschaftlicher Installation eine sichere Verbindung gewährleistet. Die über die zylindrische Innenfläche der Muffe vorstehenden Profilteile können als ein Ring, Sägezahn, Noppen oder dergleichen ausgebildet sein. Befindet sich am vorderen Ende der Muffe ein Ring, so kann dieser beim Einführen des Rohrendes zum Abstreifen von überflüssigem Klebemittel dienen. Aufgrund der vorgeschlagenen Zentrierung wird in zuverlässiger Weise ein zu großer, unzulässiger Winkelversatz verhindert und desweiteren werden Ovalitäten von Rohr und Muffe ausgeglichen, so daß insgesamt der Klebespalt definiert vorgegeben werden kann. Sowohl in axialer Richtung als auch in Umfangsrichtung wird der Klebespalt in definierter Weise vorgegeben, ohne daß insoweit allzu enge Fertigungstoleranzen eingehalten werden müssen. Im Bereich der radial nach innen gerichteten Profilteile wird eine direkte Berührung von Kunsstoffrohr und Muffe zugelassen, wobei jedoch eine direkte Anlage des Rohres an der Innenfläche der Muffe im Bereich des Klebespaltes aufgrund der Profilteile verhindert wird. Zweckmäßig dient das im Inneren der Muffe angeordnete Profilteil zur festen Aufnahme des Rohrendes, wobei ein Preßsitz vorgesehen wird, zur Fixierung und Zentrierung des Rohrendes.

Das im hinteren Teil der Muffe angeordnete Profilteil kann in zweckmäßiger Weise mit Längsrillen, ähnlich einer Verzahnung ausgebildet sein, wobei die radial nach innen weisenden Spitzen der einzelnen Sägezähne mit Preßsitz auf der Außenfläche des Rohrendes aufliegen. Es hat sich als besonders zweckmäßig herausgestellt, die am vorderen Ende der Muffe vorgesehenen Profilteile gegenüber den am hinteren Ende der Muffe angeordneten zweiten Profilteilen mit einem größeren Innendurchmesser auszubilden. Mit den am hinteren Ende angeordneten Profilteilen erfolgt insbesondere durch den Preßsitz ein Einklemmen des Rohrendes, das beim Einschieben problemlos an den vorderen Profilteilen mit etwas größerem Durchmesser vorbeigeführt werden konnte.

In einer besonderen Ausgestaltung weist der innere Profilteil eine konisch sich verjüngende Fläche auf, um die Stirnkante des Rohres bei der Montage zu verklemmen. Ferner wird eine eventuelle Ovalität des Rohrendes beim Einklemmen desselben in den Konus weitgehend ausgeglichen, wodurch in vorteilhafter Weise eine Vergleichmäßigung der Spaltbreite sichergestellt wird. Aufgrund des Einklemmens der Stirnkante des Rohrendes in den Konus wird eine hohe Festigkeit, sichere Verschweißung und eine schnelle Belastbarkeit erreicht. Im Rahmen dieser Erfindung können alternativ oder zusätzlich zu dem konischen Teil im Inneren der Muffe Längsrillen versehen sein, um ein zuverlässiges Einklemmen des Rohrendes zu erhalten. Eine derartige Riffelung ergibt den Vorteil, daß nach dem Einklemmen des Rohrendes auf dieses praktisch keine Rückstellkräfte wirksam sind, welche das Rohrende wieder herauslösen könnten.

In besonderen Ausgestaltung ist die Muffe mit einer Markierung für die Winkelstellung versehen. So kann bei einer Vormontage das in die Muffe eingeführte Rohr mit einem der Muffen-Markierung zugeordneten Strich oder ähnlichem versehen werden. Bei der endgültigen Herstellung der Verbindung kann das Rohrende ohne Schwierigkeiten in die erforderliche Drehwinkellage bezüglich der Muffe gebracht werden, ohne daß ein nachträgliches Ausrichten, welches aufgrund des schnellen Abbindens des Klebemittels in der Praxis auch kaum durchführbar ist, noch vorgenommen werden müßte.

Die Erfindung wird nachfolgend anhand der in der Zeichnung dargestellten Ausführungsbeispiele näher erläutert. Es zeigen:

Figur 1     Schematisch einen axialen Längsschnitt durch eine Doppelmuffe,

Figur 2     Einen Längsschnitt durch eine Muffe, welche im Inneren einen konischen Teil aufweist.

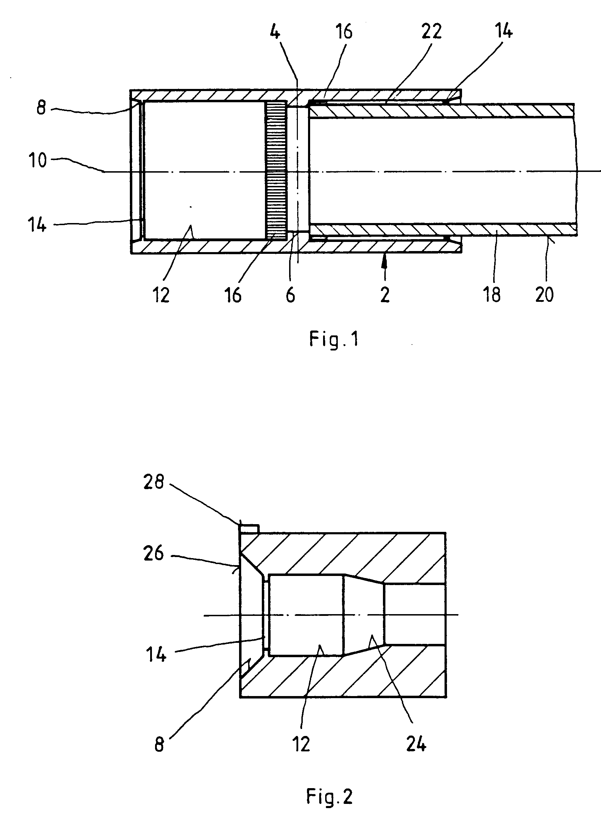

Figur 1 zeigt eine Verbindungsanordnung mit zwei Muffen 2, welche bezüglich einer Mittenebene 4 symmetrisch, im übrigen aber gleich ausgebildet sind. In der Mitte befindet sich ein ringförmiger Anschlag 6 für die beiden jeweils von den freien Enden der Muffen 2 einschiebbaren Rohrenden. Der Einfachheit halber wird nachfolgend die linke Muffe näher erläutert, wobei diese Erläuterung entsprechend auch für die anderen Muffe gilt.

Am vorderen Ende weist die Muffe 2 eine konische Fläche 8 auf, wobei die Konusspitze im Inneren der Muffe auf der Längsachse 10 liegt. Mittels dieser konischen Fläche wird das Einführen eines Rohrendes in die Muffe erleichtert und eine Zentrierung ermöglicht. Die Muffe weist eine zylindrische Innenfläche 12 auf. Am Übergang von der konischen Fläche 8 zur zylindrischen Innenfläche 12 ist ein Profilteil 14 vorgesehen, welcher radial nach Innen über die Innenfläche 12 vorsteht. Dieser Profilteil 14 ist hier als ein sich über den Gesamtumfang erstreckender Ring ausgebildet. Dieser dient sowohl zur Zentrierung des einzuführenden Rohrendes als auch zum Abstreifen von Klebemittel, das vor dem Einschieben auf das Rohrende aufgetragen worden ist. Am inneren Ende der Muffe ist ein innerer Profilteil 16 vorgesehen. Dieser Profilteil 16 ist in Längsrichtung geriffelt, wobei zahnartige Vorsprünge oder Radialprofile radial nach innen über die Innenfläche 12 vorstehen. Aufgrund der Profilteile 14, 16 wird ein in die Muffe eingeschobenes Rohrende im wesentlichen koaxial zur Längsachse 10 der Muffe ausgerichtet. Dies hat zur Folge, daß der Klebespalt zwischen der Außenfläche des Rohrendes und der Innenfläche 12 sowohl über den Umfang als auch in Längsrichtung zwischen den beiden Profilteilen 14, 16 praktisch konstant ist. Dies gilt auch und gerade unter Berücksichtigung von Herstellungstoleranzen. Der zweite Profilteil 16 ist für einen Preßsitz des Rohrendes 18 ausgebildet. Zweckmäßig weist der innere Profilteil 16 einen kleineren Innendurchmesser auf als der weitere Profilteil 14. Der innere Profilteil 16 ist ähnlich einer Verzahnung mit etwa dreieckförmiten Zähnen ausgebildet und weist eine Vielzahl von Längsrillen auf. Diese Längsrillen reichen radial zweckmäßig bis zur Innenfläche 12.

In hier nicht dargestellten alternativen Ausführungsformen können Profilteile auch in Form von Noppen, Segmenten oder dergleichen vorgesehen sein, die wiederum in vorgebbarer Höhe über die Innenfläche der Muffe vorstehen.

Zwischen der Außenfläche 20 des Rohrendes 18 und der Innenfläche 12 ist ein Klebespalt 22 zu erkennen, der hier aus Gründen der Übersichtlichkeit vergrößert dargestellt ist, wobei ferner auch das für die Kaltschweißung vorgesehene Klebemittel fehlt. Die axial beabstandeten Profilteile 14, 16 definieren erfindungsgemäß exakt die Größe des Klebespaltes 22. Ein Winkelversatz oder ein Achsversatz von Rohrende und Muffe wird aufgrund der Profilteile 14, 16 vermieden. Aufgrund des in Umfangsrichtung ebenso wie in Achsrichtung weitgehend konstant großen Klebespaltes 22 wird eine funktionssichere und dichte Verbindung mittels des einzuführenden Klebemittels sichergestellt, ohne daß örtlich durch einen Mangel an Klebemittel Undichtheiten zu befürchten sind.

Figur 2 zeigt eine besonders wesentliche Ausführungsform, gemäß welcher in der Muffe die zylindrische Innenfläche 12 kombiniert ist mit einer zum Muffeninneren sich verjüngenden konischen Fläche 24. Diese konische Fläche 24 steht entsprechend dem oben erläuterten Profilteil radial nach innen über die Innenfläche 12 vor und bewirkt eine definierte Ausrichtung des einzuführenden Rohrendes. Bei der Montage ermöglicht der konische Teil 24 das Einklemmen des Stirnbereiches vom Rohrende, wobei auch die Zentrierung für den gleichmäßigen Klebespalt erfolgt. Eine eventuell vorhandene Ovalität des Rohrendes wird beim Einpressen oder Einklemmen zumindest näherungsweise problemlos ausgeglichen. Am vorderen Ende der Muffe befindet sich wiederum der Profilteil 14, an welchen sich die konische Fläche 8 zur axialen Stirnkante 26 der Muffe anschließt. Die konische Fläche 24 wird ferner zweckmäßigerweise mit in Längsrichtung geriffelten Profilen versehen, um die eingangs bereits dargelegten Vorteile und Wirkungszusammenhänge zu erhalten. Die vorgeschlagene Kombination der geriffelten Profile mit der konischen Fläche 24 ergibt ein verbessertes Einklemmen des Rohrendes.

Die Muffe 2 enthält ferner eine Markierung 28, um eine definierte Ausrichtung des Rohres bezüglich der Muffe bzw. eines Fitting oder dergleichen zu gewährleisten. Bei der Vormontage wird das Rohrende in die Muffe eingeschoben und nach exakter Ausrichtung wird das Rohr entsprechend der Markierung 28 mit einer Linie versehen, welche die genaue Drehwinkellage bezeichnet. Zur endgültigen Montage wird das wieder herausgezogene Rohrende mit Klebemittel bestrichen und ebenso auch die Innenfläche der Muffe. Nachfolgend kann ein exakt winkelgerechtes Einschieben entsprechend der Markierungslinie auf dem Rohrende bei exakter Ausrichtung zu der Markierung 28 erfolgen. Diese Maßnahmen sind äußerst zweckmäßig, da aufgrund des engen Klebespaltes sowie der kurzen Abbindezeit des Klebemittels ein nachträgliches Verdrehen nicht zweckmäßig ist und bereits nach kürzester Zeit auch nicht mehr durchführbar ist.

**Patentansprüche**

1. Verbindungsanordnung mit einem eine Muffe (2) aufweisenden und aus Kunststoff bestehenden Verbindungsformstück, mit einem in die Muffe (2) einschiebbaren Rohrende (18) eines Kunststoffrohres und mit einem eine Innenfläche (12) der Muffe begrenzenden Anschlag (6) für das Rohrende (18), welcher Anschlag (6) in radialer Richtung über die Innenfläche (12) vorsteht, wobei die als Klebefläche ausgebildete Innenfläche (12) der Muffe und die Außenfläche (20) des Rohrendes (18) mittels eines Klebemittels verbindbar sind,
dadurch gekennzeichnet, daß am inneren Ende der Innenfläche (12) ein radial nach innen gerichteter Profilteil (16) angeordnet ist, an welchen der Anschlag (16) unmittelbar anschließt, daß der genannte innere Profilteil (16) mit einer Riffelung versehen ist und/oder eine sich zur Längsachse verjüngende Fläche (24) aufweist daß in der Nähe der axialen Stirnkante (26) der Muffe beabstandet von dem inneren Profilteil (16) die Innenfläche (12) einen weiteren Profilteil (14) aufweist, welcher in radialer Richtung über die Innenfläche (12) vorsteht, wobei die Innenfläche (12) zwischen den Profilteilen (14, 16) zylindrisch ausgebildet ist, und daß der genannte innere Profilteil (16) den vorderen Teil des eingeschobenen Rohrendes (18), auf welches vor dem Einschieben das Klebemittel aufgetragen worden ist, mit Preßsitz umgibt, wobei eine Kaltschweißverbindung mit dem vorderen Teil des eingeschobenen Rohrendes (18) besteht.

2. Verbindungsanordnung nach Anspruch 1, dadurch gekennzeichnet, daß der weitere Profilteil (14) als über die Innenfläche (12) in Richtung zur Längsachse gerichtete Ringe, Noppen, Segmente oder Riffelungen ausgebildet ist.

3. Verbindungsanordnung nach Anspruch 1 oder 2, dadurch gekennzeichnet, daß die Riffelung des inneren Profilteils (16) als Längsriffelung mit zur Längsachse (10) parallelen Profilen sowie zwischen diesen vorgesehenen Rillen ausgebildet ist und daß der am vorderen Ende der Muffe angeordnete weitere Profilteil (14) ringförmig ausgebildet ist.

4. Verbindungsanordnung nach einem der Ansprüche 1 bis 3, dadurch gekennzeichnet, daß zwischen der axialen Stirnkante (26) der Muffe (2) und der zylindrischen Innenfläche (12) oder dem vorderen Profilteil (14) eine sich konisch zur Längsachse (10) verjüngende Fläche (8) vorgesehen ist.

5. Verbindungsanordnung nach einem der Ansprüche 1 bis 4, dadurch gekennzeichnet, daß die Muffe (2) außen eine Markierung (28) aufweist, mittels welche eine winkelgerechte Ausrichtung des Rohrendes (18) bezüglich der Muffe (2) vornehmbar ist.

6. Verbindungsanordnung nach einem der Ansprüche 1 bis 5, dadurch gekennzeichnet, daß der oder die Profilteile (14, 16) integraler Bestandteil der Muffe sind und aus dem gleichen Kunststoff wie diese bestehen.

7. Verbindungsanordnung nach einem der Ansprüche 1 bis 6, dadurch gekennzeichnet, daß der innere Profilteil (16) einen geringeren Innendurchmesser aufweist als der am vorderen Ende der Muffe angeordnete weitere Profilteil (14).

## Claims

1. Connecting arrangement having a shaped connector which consists of a plastics material and has a sleeve (2), with a tube end (18) of a plastics tube which is adapted to be inserted in the sleeve (2) and with an abutment (6) for the tube end (18), this abutment being adjacent to an inner surface (12) of the sleeve and projecting radially from the inner surface (12), the inner surface (12) of the sleeve, which takes the form of an adhesive surface, and the outer surface (20) of the tube end (18) being adapted to be connected by means of an adhesive, characterised in that, on the inner end of the inner surface (12), there is a radially inwardly directed profiled member (16) to which the abutment (16) is directly adjacent, in that said inner profiled member (16) has a corrugated surface and/or a surface (24) which tapers towards the longitudinal axis, in that, close to the axial front edge (26) of the sleeve, at a spacing from the inner profiled member (16), the inner surface (12) has another profiled member (14) which projects radially from the inner surface (12), the inner surface (12) being cylindrically formed between the profiled members (14,16), and in that said inner profiled member (16) is press-fitted around the front part of the inserted tube end (18) to which the adhesive has been applied before insertion, to form a cold-welded joint with the front part of the inserted tube end (18).

2. Connecting arrangement according to claim 1, characterised in that the additional profiled member (14) takes the form of rings, knobs, segments or corrugations provided over the inner surface (12) and directed towards the longitudinal axis.

3. Connecting arrangement according to claim 1 or 2, characterised in that the corrugations on the inner profiled member (16) are constructed as longitudinal corrugations extending parallel to the longitudinal axis (10) and grooves provided between the corrugations and in that the additional profile section (14) arranged at the front end of the sleeve is of annular configuration.

4. Connecting arrangement according to one of claims 1 to 3, characterised in that, between the axial front edge (26) of the sleeve (2) and the cylindrical inner surface (12) or the front profiled member (14), there is provided a surface (8) which tapers conically towards the longitudinal axis (10).

5. Connecting arrangement according to one of claims 1 to 4, characterised in that the outside the sleeve (2) has a marking (28) which enables the tube end (18) to be aligned in the correct angular position relative to the sleeve (2).

6. Connecting arrangement according to one of claims 1 to 5, characterised in that the or each profiled member (14,16) is an integral component of the sleeve and consists of the same plastics material as the sleeve.

7. Connecting arrangement according to one of claims 1 to 6, characterised in that the inner profiled member (16) has a smaller internal diameter than the additional profiled member (14) arranged at the front end of the sleeve.

**Revendications**

1. Dispositif de raccordement comprenant une pièce moulée de raccordement présentant un manchon (2) et réalisée en matière plastique, une extrémité de tube (18) appartenant à un tube en matière plastique, qui peut être emmanchée dans le manchon (2), et une butée (6) pour l'extrémité de tube (18) et qui délimite une surface interne (12) du manchon, laquelle butée (6) fait saillie dans la direction radiale sur la surface interne (12), la surface interne (12) du manchon, qui constitue une surface de collage, et la surface externe (20) de l'extrémité de tube (18) pouvant être assemblées au moyen d'une colle.
caractérisé en ce qu'à l'extrémité intérieure de la surface interne (12), est disposée une partie profilée (16) qui est dirigée radialement vers l'intérieur, à laquelle la butée (16) fait immédiatement suite,
en ce que la partie profilée intérieure (16) est munie d'une striure et/ou présente une surface (24) qui se rétrécit vers l'axe longitudinal,
en ce que, dans le voisinage du bord frontal axial (26) du manchon, à distance de la partie profilée intérieure (16), la surface interne (12) présente une autre partie profilée (14) qui fait saillie sur la surface interne (12) dans la direction radiale, la surface interne (12) étant de configuration cylindrique entre les parties profilées (14, 16),
et en ce que ladite partie profilée intérieure (16) entoure avec ajustement à serrage la partie avant de l'extrémité de tube (18) emmanchée, sur laquelle la colle a été déposée avant l'emmanchement, et qu'il se produit une liaison par soudage à froid avec la partie avant de l'extrémité de tube (18) emmanchée.

2. Dispositif de raccordement selon la revendication 1, caractérisé en ce que l'autre partie profilée (14) est constituée par des bagues, bossettes, segments ou striures qui sont orientés vers l'axe longitudinal sur la surface interne (12).

3. Dispositif de raccordement selon la revendication 1 ou 2, caractérisé en ce que la striure de la partie profilée intérieure (16) est réalisée sous la forme d'une striure longitudinale possédant des profils parallèles à l'axe longitudinal (10) ainsi que des sillons prévus entre ces profils, et en ce que l'autre partie profilée (14) disposée à l'extrémité avant du manchon est de configuration annulaire.

4. Dispositif de raccordement selon une des revendications 1 à 3. caractérisé en ce qu'il est prévu, entre le bord frontal axial (26) du manchon (2) et la surface interne cylindrique (12) ou la partie profilée avant (14), une surface (8) qui se rétrécit en cône vers l'axe longitudinal (10).

5. Dispositif de raccordement selon une des revendications 1 à 4, caractérisé en ce que le manchon (2) présente extérieurement une marque (28) au moyen de laquelle on peut procéder à un alignement angulaire correct de l'extrémité de tube (18) par rapport au manchon (2).

6. Dispositif de raccordement selon une des revendications 1 à 5, caractérisé en ce que la ou les partie(s) profilée(s) (14, 16) font partie intégrante du manchon et sont composées de la même matière plastique que ce dernier.

7. Dispositif de raccordement selon une des revendications 1 à 6, caractérisé en ce que la partie profilée intérieure (16) présente un plus petit diamètre intérieur que l'autre partie profilée (14) disposée à l'extrémité avant du manchon.

Fig.1

Fig.2